(19) Europäisches Patentamt
European Patent Office
Office européen des brevets

(11) Numéro de publication: **0 047 198**
**B1**

# (12) FASCICULE DE BREVET EUROPEEN

(45) Date de publication du fascicule du brevet: **08.08.84**

(51) Int. Cl.³: **G 02 F 1/13**, C 09 K 3/34

(21) Numéro de dépôt: **81401286.0**

(22) Date de dépôt: **11.08.81**

(54) **Procédé de visualisation utilisant un effet thermo-optique avec mémoire dans une couche mince de cristal liquide disquotique, et cristaux liquides disquotiques présentant un tel effet.**

(30) Priorité: **02.09.80 FR 8018924**

(43) Date de publication de la demande:
**10.03.82 Bulletin 82/10**

(45) Mention de la délivrance du brevet:
**08.08.84 Bulletin 84/32**

(84) Etats contractants désignés:
**DE FR GB NL**

(56) Documents cités:
**EP - A - 0 030 879**
**FR - A - 2 275 087**
**FR - A - 2 389 955**

**MOLECULAR CRYSTALS AND LIQUID CRYSTALS, vol. 49, no. 6, 1979, New York, US,C. DESTRADE et al.: "Mesomorphic polymorphism in some disc-like compounds", pages 169-174**
**PHYSICS LETTERS, vol. 72A, no. 3, 9 juillet 1979,AMSTERDAM, NL,NGUYEN HUU TINH et al.: "Nematic disc-like liquid crystals", pages 251-254**

(73) Titulaire: **THOMSON-CSF, 173, Boulevard Haussmann, F-75379 Paris Cedex 08 (FR)**

(72) Inventeur: **Billard, Jean, THOMSON-CSF SCPI 173, bld Haussmann, F-75360 Paris Cedex 08 (FR)**
Inventeur: **Dubois, Jean-Claude, THOMSON-CSF SCPI 173, bld Haussmann, F-75360 Paris Cedex 08 (FR)**
Inventeur: **Hareng, Michel, THOMSON-CSF SCPI 173, bld Haussmann, F-75360 Paris Cedex 08 (FR)**
Inventeur: **Le Berre, Serge, THOMSON-CSF SCPI 173, bld Haussmann, F-75360 Paris Cedex 08 (FR)**
Inventeur: **Perbet, Jean-Noel, THOMSON-CSF SCPI 173, bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

**EP 0 047 198 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne un procédé de visualisation utilisant un effet thermo-optique avec mémoire dans une couche mince de cristal liquide disquotique. Elle concerne aussi les cristaux liquides disquotiques présentant un tel effet.

On sait que l'effet thermo-optique, dans un cristal liquide, est utilisable pour la visualisation.

Les cristaux liquides utilisés dans l'art connu sont les cholestériques et les smectiques.

Les cristaux liquides disquotiques, lors de leur découverte récente, ne paraissaient pas susceptibles de présenter un effet thermo-optique utilisable pour la visualisation.

En effet, les conditions à remplir pour une telle utilisation sont les suivantes:

Le cristal liquide, placé en couche mince entre deux lames transparentes, est porté à une température inférieure de quelques degrés centigrades à la température à laquelle la phase mésomorphe utilisée (smectique ou cholestérique) présente une transition en une autre phase mésomorphe ou une phase liquide isotrope. Il est fait en sorte que la couche soit uniformément orientée, soit grâce à un traitement préalable de la face des lames supports en contact avec la couche, soit par application d'un champ électrique. Elle est ainsi parfaitement et uniformément transparente.

Un faisceau lumineux d'inscription , généralement choisi dans le domaine du proche infragrouge, est modulé en intensité par un signal transmettant l'image à inscrire et balaye le cellule point par point. Lorsque l'énergie apportée en un point par le faisceau a été suffisante pour échauffer localement le cristal liquide jusqu'au delà du point de transition, et à condition que les conditions de refroidissement favorisent un retour rapide à la température initiale, il se forme alors une texture microscopiquement ordonnée, par exemple en structure à conique focale dans le cas des smectiques, mais macroscopiquement désordonnée. Elle est suffisamment diffusante, dans le cas de certains cholestériques et de certains smectiques, pour donner un bon contraste par rapport aux points où l'état de transparence a été conservé. Cet état est précisément celui des points où l'énergie lumineuse du faisceau modulé a été insuffisante pour provoquer la transition. En outre, il y a un effet »mémoire«, l'information pouvant être conservée par l'état diffusant qui est susceptible de se maintenir bien au delà d'une centaine d'heures.

En projetant l'image de la cellule, par exemple par un dispositif optique, sur un écran, les points non diffusants de la cellule apparaissent comme des points brillants et les points diffusants comme des points sombres.

Il existe des variantes de la méthode de visualisation décrite ci-avant. Mais dans tous les cas, la possibilité de visualisation avec mémoire n'est possible que si la transition inverse obtenue par refroidissement rapide crée une structure macroscopiquement désordonnée et, de plus, stable, comme c'est le cas de la structure en conique focale des smectiques.

Une autre possibilité d'utilisation avantageuse dex cristaux liquides pour la visualisation repose sur la possibilité de supprimer volontairement le désordre créé par le refroidissement rapide en appliquant pendant la durée de ce refroidissement rapide un champ électrique transverse alternatif ayent une fréquence de l'ordre du kilohertz. Les points qui ont subi la transition reviennent, sous l'influence orientante du champ, en phase mésomorphe, macroscopiquement ordonnée, donc transparente. L'utilisation d'un champ variable permet alors de supprimer la modulation du faisceau pendant la phase d'inscription. Ceci a conduit la Demanderesse à déposer le 14 Juin 1974 une demande de brevet publiée sous le numéro FR-A-2 275 987 et concernant un dispositif de reproduction d'images à cristal liquide smectique. Dans ce dispositif, la couche de cristal liquide est balayée par un faisceau lumineux d'intensité constante qui amène les points de la couche dans une phase isotrope, puis pendant le refroidissement de ces points un signal vidéo est appliqué suivant l'information à inscrire.

Certains cristaux liquides disquotiques, notamment des dérivés hexa substitués du triphénylène, présentent les mésophases suivantes:

— une mésophase $D_F$ dite disquotique à fils;
— une mésophase $D_B$ que l'on a qualifié de texture mosaïque;
— exceptionnelement d'autes mésophases, telles que la phase disquitique inclinée.

La mésophase $D_F$ présente un ordre dans lequel seul le parallélisme des petits disques constitués par les molécules de cristal liquide est regoureux, à l'agitation thermique près. A la différence de la structure en conique focale des smectiques, il n'y a'pas-de loi régissant la distance entre deux groupes de molécules situés dans deux plans parallèles. Une telle structure est transparente et ne présente aucun effet diffusant.

La mésophase $D_B$ correspond à des empilements de molécules en colonnes. Dans ces colonnes les molécules sont parallèles entre elles et perpendiculaires à l'axe de chaque colonne.

En ce qui concerne l'effet du champ électrique, dans la phase $D_F$, on sait que les disques moléculaires peuvent être orientés en raison de l'existence d'une anisotropie diélectrique, qui, dans le cas dérivés hexasubstitués du triphénylène est le plus souvent positive. En revanche la mésophase $D_B$ est insensible au champ électrique.

L'invention a pour but d'utiliser les propriétés thermo-optiques de ces cristaux disquotiques.

L'invention a donc pour objet un procédé de visualisation avec mémoire d'une information à partir d'une cellule comprenant une couche de

cristal liquide uniformément orientée entre deux lames supports transparentes, la visualisation de ladite information résultant de l'effet thermooptique engendré dans ladite couche par un balayage point par point de ladite cellule à l'aide d'un faisceau lumineux d'inscription, le procédé comportant:

a) une étape d'inscription dans laquelle ledit faisceau lumineux est modulé en intensité de façon à porter en température, en fonction de ladite information, certains points de ladite couche depuis une phase originelle vers une autre phase,
b) une étape de refroidissement rapide des points de ladite couche qui ont été vers cette autre phase lors de l'étape d'inscription, jusqu'à une température correspondant à la phase originelle, ledit refroidissement contribuant à rendre ces points diffusants,

caractérisé en ce que le cristal liquide est un cristal liquide disquotique et que, dans l'étape d'inscription, les points de la couche de cristal liquide sont portés soit de la phase $D_B$ vers la phase $D_F$ ou la phase isotrope, soit de la phase inclinée vers la phase $D_F$ ou la phase isotrope.

L'invention a aussi pour objet un procédé de visualisation avec mémoire d'une information à partir d'une cellule comprenant une couche de cristal liquide uniformément orientée entre deux lames supports transparentes, chacune desdites lames étant revêtues sur sa face interne d'au moins une électrode transparente, ladite information résultant de l'effet mixte thermique et électrique engendré dans ladite couche par un ballayage point par point de ladite cellule à l'aide d'un faisceau lumineux d'inscription et par l'application d'impulsions de tensions délivrées par lesdites électrodes, le procédé comportant:

a) une étape d'inscription dans laquelle ledit faisceau lumineux balaye les différents points de la cellule avec une intensité constante de façon à amener en température les points de ladite couche depuis une phase originelle vers une autre phase,
b) une étape de refroidissement rapide des points de ladite couche qui ont été vers cette autre phase lors de l'étape d'inscription, jusqu'à une température correspondant à la phase originelle, lesdites impulsions de tensions étant appliquées pendant le refroidissement rapide,

caractérisé en ce que cristal liquide est un cristal liquide disquotique et que, dans l'étape d'inscription, les points de la couche de cristal liquide sont portés soits de la phase $D_B$ vers la phase $D_F$ ou la phase isotrope, soit de la phase inclinée vers la phase $D_F$ ou la phase isotrope.

L'invention a également pour objet un procédé de visualisation avec mémoire d'une information à partir d'une cellule du type à affichage matriciel, ladite cellule comprenant une couche de cristal liquide uniformément orientée entre deux lames supports, chacune desdites lames étant revêtues sur la face interne d'un réseau d'électrodes matérialisant le système matriciel, les électrodes d'un de ces réseaux pouvant être chaffées sélectivement, les deux réseaux coopérant afin d'appliquer à ladite couche des impulsions de tension, le procédé comportant:

a) une étape d'inscription au cours de laquelle les points de la couche situés en vis-à-vis d'une électrode chauffante sont portés en température depuis une phase originelle vers une autre phase,
b) une étape de refroidissement de points qui ont été portés vers cette autre phase lors de l'étape d'inscription jusqu'à une température correspondant à la phase originelle, lesdites impulsions de tension étant appliquées pendant le refroidissement,

caractérisé en ce que le cristal liquide est un cristal liquide disquotique et que, dans l'étape d'inscription, les points de la couche sont portés soit de la phase $D_B$ vers la phase $D_F$ ou la phase isotrope, soit la phase inclinée vers la phase $D_F$ ou la phase isotrope.

Des exemples non limitatifs de l'invention ressortiront de la description qui suit.

Parmi les dérivés hexasubstitués du triphénylène, dont le squelette est le suivant:

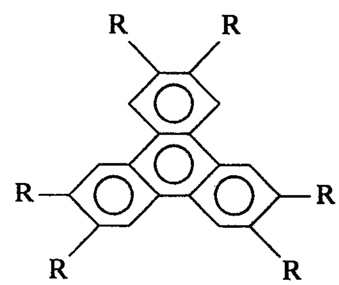

on peut citer comme produits présentant l'effet thermo-optique avec mémoire les produits caractérisés par les définitions suivantes du radical R:

Exemple I:

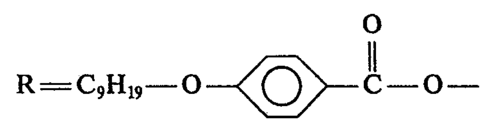

dont les transitions sont symbolisées ci-après:

K 149° C $D_B$ 183° C $D_F$ 228° C I

où K représente la phase cristalline, $D_B$ et $D_F$ les phases disquotiques connues et I la phase isotrope.

L'énergie nécessaire pour l'inscription d'une information est de 0,3 joule par $cm^2$.

Exemple II:

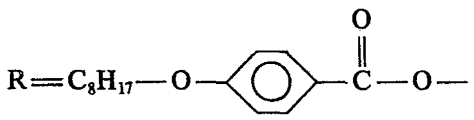

dont les transitions sont:

K-phase disquotique »inclinée« $-D_F-$ I.

Il est possible d'utiliser pour appliquer le procédé de l'invention, des mélanges des produits purs avec d'autres dérivés hexasubstitués du triphénylène. Les températures de transition sont ainsi abaissées.

Les tensions appliquées entre les électrodes transparentes dans le deuxième procédé sont de 30 Volts efficaces à une fréquence de 5 kHz pour une couche de cristal liquide d'épaisseur égale à 10 microns.

Ces impulsions de tension permettent un effacement sélectif en des points prédéterminés, à condition d'être appliqués au moment où le faisceau balaye le point de la cellule où l'on désire qu'aucune information ne soit inscrite.

L'invention est applicable:

aux valves thermo-optiques avec possibilité d'effacement sélectif;
— aux écrans à accès matriciel avec chauffage par les lignes et application de la tension du signal à inscrire par les colonnes; on se reportera aux demandes de brevet déposées par la Demanderesse et publiées sous les numéros FR-A-2 389 955, US-A-4 202 010 et JP-A-138 360/1978 concernant un »Dispositif de visualisation d'images et système de télévision utilisant un tel dispositif«.

L'intérêt de l'utilisation des cristaux liquides disquotiques à la place des smectiques ou des cholestériques est dû à deux facteurs principaux:

1. on obtient plus facilement une orientation uniforme par rapport aux parois de la cellule de cristal liquide;
2. on otient un temps de réponse plus court à l'action d'un champ électrique, notamment dans le cas des mésophases $D_B$ et »disquotique inclinée«. A titre d'exemple, en cas d'effacement sélectif, les impulsions de tension électrique peuvent être beaucoup plus courtes que la dixième de seconde, durée qui est nécessaire pour passer de l'état diffusant à l'état transparent dans le cas des smectiques.

Enfin on constate un effet mémoire aussi durable que celui des cristaux liquides habituels.

**Revendications**

1. Procédé de visualisation avec mémoire d'une information à partir d'une cellule comprenant une couche de cristal liquide uniformément orientée entre deux lames supports transparentes, la visualisation de ladite information résultant de l'effet thermo-optique engendré dans ladite couche par un balayage point par point de ladite cellule à l'aide d'un faisceau lumineux d'inscription, le procédé comportant:

a) une étape d'inscription dans laquelle ledit faisceau lumineux est modulé en intensité de façon à porter en température, en fonction de ladite information, certains points de ladite couche depuis une phase originelle vers une autre phase,
b) une étape de refroidissement rapide des points de ladite couche qui ont été portés vers cette autre phase lors de l'étape d'inscription, jusqu'à une température correspondant à la phase originelle, ledit refroidissement contribuant à rendre ces points diffusants,

caractérisé en ce que le cristal liquide est un cristal liquide disquotique et que, dans l'étape d'inscription, les points de la couche de cristal liquide sont portés de la phase $D_B$ vers la phase $D_F$ ou la phase isotrope.

2. Procédé visualisation avec mémoire d'une information à partir d'une cellule comprenant une couche de cristal liquide uniformément orientée entre deux lames supports transparentes, la visualisation de ladite information résultant dne l'effet thermo-optique engendré dans ladite couche par un balayage point par point de ladite cellule à l'aide d'un faisceau lumineux d'inscription, le procédé comportant:

a) une étape d'inscription dans laquelle ledit faisceau lumineux est modulé en intensité de façon à porter en température, en fonction de ladite information, certains points de ladite couche depuis une phase originelle vers une autre phase,
b) une étape de refroidissement rapide des points de ladite couche qui ont été portés vers cette autre phase lors de l'étape d'inscription, jusqu'à une température correspondant à la phase originelle, ledit refroidissement contribuant à rendre ces points diffusants,

caractérisé en ce que le cristal liquide est un cristal liquide disquotique et que, dans l'étape d'inscription, les points de la couche de cristal liquide sont portés de la phase inclinée vers la phase $D_F$ ou la phase isotrope.

3. Procédé de visualisation avec mémoire d'une information à partir d'une cellule comprenant une couche de cristal liquide uniformément orientée entre deux lames supports transparentes, chacune desdites lames étant revêtues

sur sa face interne d'au moins une électrode transparente, ladite information résultant de l'effet mixte thermique et électrique engendré dans ladite couche par un balayage point par point de ladite cellule à l'aide d'un faisceau lumineux d'inscription et par l'application d'impulsions de tensions délivrées par lesdites électrodes, le procédé comportant:

a) une étape d'inscription dans laquelle ledit faisceau lumineux balaye les différents points de la cellule avec une intensité constante de façon à amener en température les points de ladite couche depuis une phase originelle vers une autre phase,
b) une étape de refroidissement rapide des points de ladite couche qui ont été portés vers cette autre phase lors de l'étape d'inscription, jusqu'à une température correspondant à la phase originelle, lesdites impulsions de tensions étant appliquées pendant le refroidissement rapide,

caractérisé en ce que le cristal liquide est un cristal liquide disquotique et que, dans l'étape d'inscription, les points de la couche de cristal liquide sont portés de la phase $D_B$ vers la phase $D_F$ ou la phase isotrope.

4. Procédé de visualisation avec mé moire d'une information à partir d'une cellule comprenant une couche de cristal liquide uniformément orientée entre deux lames supports transparentes, chacune desdites lames étant revêtues sur sa face interne d'au moins une électrode transparente, ladite information résultant de l'effet mixte thermique et electrique engendré dans ladite couche par un balayage point par point de ladite cellule à l'aide d'un faisceau lumineux d'inscription et par l'application d'impulsions de tensions délivrées par lesdites électrodes, le procédé comportant:

a) une étape d'inscription dans laquelle ledit faisceau lumineux balaye les différents points de la cellule avec intensité constante de façon à amener en température les points de ladite couche depuis une phase originelle vers une autre phase,
b) une étape de refroidissement rapide des points de ladite couche qui ont été portés vers cette autre phase lors de l'étape d'inscription, jusqu'à une température correspondant à la phase originelle, lesdites impulsions de tensions étant appliquées pendant le refroidissement rapide,

caractérisé en ce que le cristal liquide est un cristal liquide disquotique et que, dans l'étape d'inscription, les points de la couche de cristal liquide sont portés de la phase inclinée vers la phase $D_F$ ou la phase isotrope.

5. Procédé de visualisation avec mémoire d'un information à partir d'une cellule du type à affichage matriciel, ladite cellule comprenant une couche de cristal liquide uniformément orientée entre deux lames supports, chacune desdites lames étant revêtues sur sa face interne d'un réseau d'électrodes matérialisant le système matriciel, les électrodes d'un de ces réseaux pouvant être chauffées sélectivement, les deux réseaux coopérant afin d'appliquer à ladite couche des impulsions de tension, le procédé comportant:

a) une étape d'inscription au cours de laquelle les points de la couche situées en vis-à-vis d'une électrode chauffante sont portés en température depuis une phase originelle vers une autre phase,
b) une étape de refroidissement des points qui ont été portés vers cette autre phase lors de l'étape d'inscription jusqu'à une température correspondant à la phase originelle, lesdites impulsions de tension étant appliquées pendant le refroidissement,

caractérisé en ce que le cristal liquide est un cristal liquide disquotique et que, dans l'étape d'inscription, les points de la couche sont portés de la phase $D_B$ vers la phase $D_F$ ou la phase isotrope.

6. Procédé de visualisation avec mémoire d'une information à partir d'une cellule du type à affichage matriciel, ladite cellule comprenant une couche de cristal liquide uniformément orientée entre deux lames supports, chacune desdites lames étant revêtues sur sa face interne d'un réseau d'électrodes matérialisant le système matriciel, les électrodes d'un de ces réseaux pouvant être chauffées sélectivement, les deux réseaux coopérant afin d'appliquer à ladite couche des impulsions de tension, le procédé comportant:

a) une étape d'inscription au cours de laquelle les points de la couche situés vis-à-vis d'une électrode chauffante sont portés en température depuis une phase originelle vers une autre phase,
b) une étape de refroidissement des points qui ont été portés vers cette autre phase lors de l'étape d'inscription jusqu'à une température correspondant à la phase originelle, lesdites impulsions de tension étant appliquées pendant le refroidissement,

caractérisé en ce que le cristal liquide est un cristal liquide disquotique et que, dans l'étape d'inscription, les points de la couche sont portés de la phase inclinée vers la phase $D_F$ ou la phase isotrope.

7. Procédé de visualisation selon l'une quelconque des revendications 1 à 6, caractérisé en ce que ledit cristal liquide disquotique est un dérivé hexasubstitué du triphénylène.

8. Procédé de visualisation selon la revendication 7, caractérisé en ce que le radical substitution dudit dérivé répond à la formule suivante:

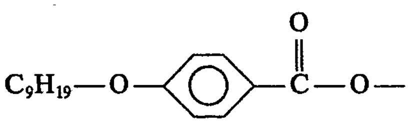

9. Procédé de visualisation selon la revendication 7, caractérisé en ce que le radical de substitution dudit dérivé répond à la formule suivante:

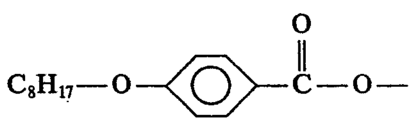

**Patentansprüche**

1. Verfahren zur Sichtdarstellung einer Information mit Speicherwirkung mittels einer Zelle, die eine Flüssigkristallschicht enthält, welche gleichförmig zwischen zwei lichtdurchlässigen Trägerplatten orientiert ist, wobei die Sichtdarstellung der genannten Information aus dem thermooptischen Effekt resultiert, der in der Schicht durch punktweises Abtasten der Zelle mittels eines einschreibenden Lichtbündels erzeugt wird, wobei das Verfahren umfaßt:

a) eine Einschreibstufe, in welcher das genannte Lichtbündel derart intensitätsmoduliert wird, daß bestimmte Punkte der Schicht in Abhängigkeit von der genannten Information von einer ursprünglichen Phase ausgehend bis zu einer anderen Phase erwärmt werden.
b) eine Stufe der schnellen Abkühlung der Punkte der Schicht, die während der Einschreibstufe in die andere Phase überführt wurden, bis zu einer der ursprünglichen Phase entsprechenden Temperatur, wobei die Abkühlung dazu beiträgt, diese Punkte lichtstreuend zu machen,

dadurch gekennzeichnet, daß der Flüssigkristall ein scheibenförmig struktierter Flüssigkristall ist und in der Einschreibstufe die Punkte der Flüssigkristallschicht von der Phase $D_B$ in die Phase $D_F$ oder die isotrope Phase überführt werden.

2. Verfahren zur Sichtdarstellung einer Information mit Speicherwirkung mittels einer Zelle, die eine Schicht eines Flüssigkristalles enthält, der gleichförmig zwischen zwei lichtdurchlässigen Trägerplatten orientiert ist, wobei die Sichtdarstellung der genannten Information aus einem thermooptischen Effekt resultiert, der in der Schicht durch punktweise Abtastung der Zelle mittels eines einschreibenden Lichtbündels erzeugt wird, wobei das Verfahren umfaßt:

a) eine Einschreibstufe, in welcher das Lichtbündel derart intensitätsmoduliert wird, daß in Abhängigkeit von der genannten Information bestimmte Punkte der Schicht aus einer ursprünglichen Phase in eine andere Phase durch Erwärmung überführt werden,
b) eine Stufe der schnellen Abkühlung der Punkte dergenannten Schicht, welche während der Einschreibstufe in die andere Phase überführt wurden, bis zu einer Temperatur, welche der ursprünglichen Phase entspricht, wobei die genannte Abkühlung dazu beiträgt, diese Punkte lichtstreuend zu machen,

dadurch gekennzeichnet, daß der Flüssigkristall ein scheibenförmig strukturierter Flüssigkristall ist und daß in der Einschreibstufe die Punkte der Flüssigkristallschicht aus der geneigten Phase in die Phase $D_F$ oder die isotrope Phase überführt werden.

3. Verfahren zur Sichtdarstellung einer Information mit Speicherwirkung mittels einer Zelle, die eine Schicht eines Flüssigkristalls enthält, der gleichförmig zwischen zwei lichtdurchlässigen Trägerplatten orientiert ist, wobei jede dieser Platten auf ihrer Innenfläche mit wenigstens einer lichtdurchlässigen Electrode beschichtet ist, und wobei die genannte Information aus dem gemischten thermischen und elektrischen Effekt resultiert, welcher in der genannten Schicht durch punktweise Abtastung der Zelle mittels eines einschreibenden Lichtbündels und durch Anlegen von Spannungsimpulsen, die von den Elektroden abgegeben werden, erzeugt wird, wobei das Verfahren umfaßt:

a) eine Einschreibstufe, in welcher das genannte Lichtbündel die verschiedenen Punkte der Zelle mit konstanter Intensität derart abtastet, daß die Punkte der Schicht aus einer ursprünglichen Phase in eine andere Phase überführt werden,
b) eine Stufe der schnellen Abkühlung der Punkte der Schicht, welche während der Einschreibstufe in die andere Phase überführt wurden, bis auf eine Temperatur, die der ursprünglichen Phase entspricht, wobei die genannten Spannungsimpulse während der schnellen Abkühlung angelegt werden,

dadurch gekennzeichnet, daß der Flüssigkristall ein scheibenförmig strukturierter Flüssigkristall ist und daß in der Einschreibstufe die Punkte der Flüssigkristallschicht von der Phase $D_B$ in die Phase $D_F$ oder die isotrope Phase überführt werden.

4. Verfahren zur Sichtdarstellung einer Information mit Speicherwirkung mittels einer Zelle, die eine Schicht eines Flüssigkristalles enthält, der gleichförmig zwischen zwei lichtdurchlässigen Trägerplatten orientiert ist, wobei jede dieser Platten auf ihrer Innenfläche mit wenigstens einer lichtdurchlässigen Elektrode beschichtet ist und wobei die genannte Information aus dem gemischten thermischen und elektrischen Effekt resultiert, welcher in der genannten Schicht durch punktweise Abtastung der Zelle mittels eines einschreibenden Lichtbündels und durch Anlegen von Spannungsimpulsen, die von den Elektroden abgegeben werden, erzeugt wird, wobei das Verfahren umfaßt:

a) eine Einschreibstufe, in welcher das genannte Lichtbündel die verschiedenen Punkte der Zelle mit konstanter Intensität derart abtastet, daß die Punkte der Schicht aus einer ursprünglichen Phase in eine andere Phase überführt werden,
b) eine Stufe der schnellen Abkühlung der Punkte der Schicht, welche während der Einschreibstufe in die andere Phase überführt wurden, bis auf eine Temperatur, die der ursprünglichen Phase entspricht, wobei die genannten Spannungsimpulse während der schnellen Abkühlung angelegt werden,

dadurch gekennzeichnet, daß der Flüssigkristall ein scheibenförmig strukturierter Flüssigkristall ist und daß in der Einschreibstufe die Punkte der Flüssigkristallschicht von der geneigten Phase in die Phase $D_F$ oder die isotrope Phase überführt werden.

5. Verfahren zur Sichtdarstellung einer Information mit Speicherwirkung mittels einer Zelle vom Typ einer Matrixanzeige, wobei die Zelle eine Schicht eines Flüssigkristalls umfaßt, der zwischen zwei Trägerplatten gleichförmig orientiert ist, wobei jede dieser Platten auf ihrer Innenfläche mit einem Netzwerk von Elektroden beschichtet ist, die das Matrixsystem darstellen, und wobei die Elektroden eines dieser Netzwerke selektiv erwärmt werden können und die beiden Netzwerke miteinander zusammenwirken, um Spannungsimpulse an die Schicht anzulegen, wobei das Verfahren umfaßt:

a) eine Einschreibstufe, während welcher die Punkte der Schicht, die einer heizenden Elektrode qegenüberliegen, aus einer ursprünglichen Phase in eine andere Phase überführt werden.
b) eine Stufe der Abkühlung derjenigen Punkte, die während der Einschreibstufe in die andere Phase überführt wurden, bis auf eine Temperatur, die der ursprünglichen Phase entspricht, wobei die Spannungsimpulse während der Abkühlung angelegt werden,

dadurch gekennzeichnet, daß der Flüssigkristall ein scheibenförmig strukturierter Flüssigkristall ist und daß während der Einschreibstufe die Punkte der Schicht aus der Phase $D_B$ in die Phase $D_F$ oder die isotrope Phase überführt werden.

6. Verfahren zur Sichtdarstellung einer Information mit Speicherwirkung mittels einer Zelle vom Typ einer Matrixanzeige, wobei die Zelle eine Schicht eines Flüssigkristalls umfaßt, der zwischen zwei Trägerplatten gleichförmig orientiert ist, wobei jede dieser Platten auf der Innenfläche mit einem Netzwerk von Elektroden beschichtet ist, die das Matrixsystem darstellen, und wobei die Elektroden eines dieser Netzwerke selektiv erwärmt werden können und die beiden Netzwerke miteinander zusammenwirken, um Spannungsimpulse an die Schicht anzulegen, wobei das Verfahren umfaßt:

a) eine Einschreibstufe, während welcher die Punkte der Schicht, die einer heizenden Elektrode gegenüberliegen, aus einer ursprünglichen Phase in eine andere Phase überführt werden,
b) eine Stufe der Abkühlung derjenigen Punkte, die während der Einschreibstufe in die andere Phase überführt werden, bis auf eine Temperatur, die der ursprünglichen Phase entspricht, wobei die Spannungsimpulse während der Abkühlung angelegt werden,

dadurch gekennzeichnet, daß der Flüssigkristall ein scheibenförmig strukturierter Flüssigkristall ist und daß in der Einschreibstufe die Punkte der Schicht von der geneigten Phase in die Phase $D_F$ oder die isotrope Phase überführt werden.

7. Sichtdarstellungsverfahren nach einem der Ansprüche 1 bis 6, dadurch gekennzeichnet, daß der scheibenförmig strukturierte Flüssigkristall ein hexasubstituiertes Tryphenylenderivat ist.

8. Sichtdarstellungsverfahren nach Anspruch 7, dadurch gekennzeichnet, daß der Substitutionsrest des Derivats folgender Formel entspricht:

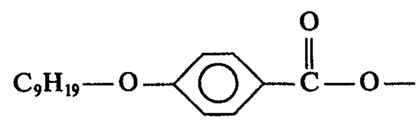

9. Sichtdarstellungsverfahren nach Anspruch 7, dadurch gekennzeichnet, daß der Substitutionsrest des Derivats folgender Formel entspricht:

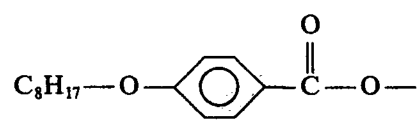

**Claims**

1. Method for the visual representation with memory of an information by means of a cell comprising a liquid crystal layer uniformly orientated between two transparent support plates, the visual representation of said information resulting from the thermooptical effect which is produced in said layer by a point scanning of said cell with the aid of an iscription light beam the method comprising:

a) an inscription stage in which said light beam is modulated in intensity in such a manner that in dependence upon said information certain points of said layer are heated from an original phase up to another phase,

b) a stage of rapid cooling of the points of the layer which have been brought during the inscription stage into the other phase to a temperature corresponding to the original temperature, said cooling contributing to making said points light diffusing,

characterized in that the liquid crystal is a disk-shape structured liquid crystal and in the inscription stage the points of the liquid crystal layer are brought from the phase $D_B$ to the phase $D_F$ or the isotropic phase.

2. Method for the visual representation with memory of an information by means of a cell comprising a liquid crystal layer uniformly orientated between two transparent support plates, the visual representation of said information resulting from the thermooptical effect which is produced in said layer by a point by point scanning of said cell with the aid of an inscription light beam, the method comprising:

a) an inscription stage in which said ligth beam is modulated in intensity in such a manner that in dependence upon said information certains points of said layer are heated from an original phase up to another phase,
b) a stage of rapid cooling of the points of the layer which have been brought during the inscription stage into the other phase to a temperature corresponding to the original temperature, said cooling contributing to making said points light diffusing,

characterized in that the liquid crystal is a disk-shape structured liquid crystal and that in the inscription stage the points of the liquid crystal layer are brought from the inclined phase to the phase $D_F$ or the isotropic phase.

3. Method for the visual representation with memory of an information by means of a cell comprising a layer of liquid crystal uniformly orientated between two transparent support plates, each of said plates being covered on its inner face with at least one transparent electrode and said information resulting from the mixed thermal and electrical effect produced in said layer by point by point scanning of the cell by means of an inscription light beam and by application of voltage pulses furnished by said electrodes, the method comprising:

a) an inscription stage in which said light beam scans the various points of the cell with constant intensity in such a manner that the points of said layer are brought in temperature from an original phase to another phase,
b) a stage of rapid cooling of the points of the layer which have been brought during the inscription phase into said other phase to a temperature corresponding to the original phase, said voltage pulses being applied during the rapid cooling,

characterized in that the liquid crystal is a disk-shape structured liquid crystal and that in the inscription stage the points of the liquid crystal layer are brought from the phase $D_B$ to the phase $D_F$ or the isotropic phase.

4. Method for the visual representation with memory of an information by means of a cell comprising a layer of liquid crystal orientated uniformly between two transparent support plates, each of said plates being coated on its inner face with at least one transparent electrode and said information resulting from the mixed thermal and electrical effect produced in said layer by point by point scanning of the cell by means of an inscription light beam and by applying voltage pulses furnished by the electrodes, the method comprising:

a) an inscription stage in which said light beam scans the various points of the cell with constant intensity in such a manner that the points of said layer are brought in temperature from an original phase to another phase,
b) a stage of rapid cooling of the points of the layer which have been brought during the inscription phase into said other phase to a temperature corresponding to the original phase, said voltage pulses being applied during the rapid cooling,

characterized in that the liquid crystal is a disk-shape structured liquid crystal and that in the inscription stage the points of the liquid crystal are brought from the inclined phase to the phase $D_F$ or the isotropic phase.

5. Method for the visual representation with memory of an information by means of a cell of the type of a matrix display, the cell comprising a layer of a liquid crystal uniformly orientated between two support plates, each of said plates being coated on its inner face with a network of electrodes representating the matrix system, and the electrodes of one of said network can be selectively heated and the two networks co-operate together for applying to said layer voltage-pulses, the method comprising:

a) an inscription stage during which the points of the layer opposite a heating electrode are brought in temperature from an original phase to another phase,
b) a stage of cooling the points which have been brought during the inscription phase to the other phase to a temperature corresponding to the original phase, the voltage pulses being applied during the cooling,

characterized in that the liquid crystal is a disk-spape structured liquid crystal and that during the inscription stage the points of the layer are brought from the phase $D_B$ to the phase $D_F$ or the isotropic phase.

6. Method for the visual representation with memory of an information by means of a cell the

type of a matrix display, the cell comprising a layer of a liquid crystal uniformly orientated between two support plates, each of said plates being coated on its inner face with network of electrodes representating the matrix system, and the electrodes of one of said network can be selectively heated and the two networks co-operate together for applying to said layer voltage pulses, the method comprising:

a) an inscription stage during which the points of the layer opposite a heating electrode are brought in temperature from an original phase to another phase,
b) a stage of cooling the points which have been brought during the inscription phase to the other phase to a temperature corresponding to the original phase, the voltage pulses being applied during the cooling,

characterized in that the liquid crystal is a disk-shape structured liquid crystal and that in the inscription stage the points of the layer are brought from the inclined phase to the phase $D_F$ or the isotropic phase.

7. Visual representation method according to any one of claims 1 to 6, characterized in that said disk-shape structured liquid crystal is a hexasubstituted derivative of triphenylene.

8. Visual representation method according to claim 7, characterized in that the supstituent of said derivative corresponds to the following formula:

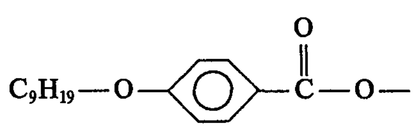

9. Visual representation method according to claim 7, characterized in that the substituent of said derivative corresponds to the following formula: